# EUROPÄISCHE PATENTSCHRIFT

(11) **EP 3 928 019 B1**
(45) Veröffentlichungstag und Bekanntmachung des Hinweises auf die Patenterteilung: **14.02.2024**
(21) Anmeldenummer: 19808600.1
(22) Anmeldetag: 27.11.2019
(51) Int. Cl.: F16L 33/025, F16L 33/035

(54) **SCHLAUCHKLEMME**
HOSE CLAMP
COLLIER DE SERRAGE POUR TUYAUX SOUPLES

(30) Priorität: 22.02.2019 EP 19158842
(43) Veröffentlichungstag der Anmeldung: 29.12.2021
(73) Patentinhaber: Oetiker Schweiz AG, 8810 Horgen (CH)
(72) Erfinder: WIDRIG, Markus, 8717 Benken SG (CH); VETTER, Andreas, 8808 Pfäffikon (CH); BÖSIGER, Maxime, 8840 Einsiedeln (CH)
(74) Vertreter: Strehl Schübel-Hopf & Partner
(86) Internationale Anmeldenummer: PCT/EP2019/082694
(87) Internationale Veröffentlichungsnummer: WO 2020/169222

(56) Entgegenhaltungen:
- EP-A1- 1 867 881
- WO-A1-2009/152832
- US-A1- 2003 014 846
- US-A1- 2017 227 030

## Beschreibung

### Stand der Technik

Schlauchklemmen zum Anschluss etwa eines Schlauches an einen Rohrnippel werden meistens mit vorgegebenem Nenndurchmesser so gestaltet, dass im gespannten Zustand die Innenfläche des Klemmbandes über ihren gesamten Umfang lückenlos an dem Schlauch anliegt und zwischen diesem und dem Rohrnippel eine durchgehende Flächenpressung erreicht wird.

Aus WO 2017/005283 A1 ist eine Schlauchklemme bekannt, bei der der äußere Endabschnitt des Klemmbandes mehrere Öffnungen und eine ohrartige Spanneinrichtung zum Spannen der Schlauchklemme um das Abbindegut und der innere Endabschnitt in die Öffnungen einhängbare Haken zum Schließen der Schlauchklemme hat. Im äußeren Endabschnitt des Klemmbandes ist ferner ein Bandbogen zur Aufnahme und Führung einer am inneren Ende des Klemmbandes vorhandenen Zunge vorgesehen.

Eine Schlauchklemme mit den Merkmalen des Oberbegriffs des Anspruchs 1 ist in US 2003/014846 A1 offenbart.

### Abriss der Erfindung

Der Erfindung liegt die generelle Aufgabe zugrunde, Nachteile, wie sie bei vergleichbaren Schlauchklemmen nach dem Stand der Technik auftreten, mindestens teilweise zu beseitigen. Eine speziellere Aufgabe der Erfindung kann darin gesehen werden, eine im Durchmesser verstellbare Schlauchklemme mit hoher Festigkeit der den inneren mit dem äußeren Bandabschnitt verbindenden Teile zu schaffen.

Die Lösung dieser Aufgabe gelingt mit der in Anspruch 1 angegebenen Schlauchklemme. Bei dieser sind an den einander überlappenden Bandabschnitten Haken zum Schließen der Schlauchklemme angeordnet, die aus dem Klemmband herausgeprägt und auf weniger als die Blechdicke gedrückt stark kaltverfestigt sind und die jeweils einen Lappen aufweisen, wobei im geschlossenen Zustand der Schlauchklemme der Lappen mindestens eines am inneren Bandabschnitt angeordneten Hakens und der Lappen eines am äußeren Bandabschnitt angeordneten Hakens einander übergreifen und die Kraftübertragung im gespannten Zustand der Schlauchklemme über einander berührenden Querflächen der Haken erfolgt.

Die Ausbildung durch Kaltumformung und dadurch starke Kaltverfestigung verleiht den Haken hohe Festigkeit (insbesondere können sich lokale Verfestigungen ausbilden, die die Haken verstärken); sie kommen daher mit geringer Höhe aus, so dass sie weniger weit vom Klemmband abstehen. Dadurch verbessert sich die Kraftangriffslinie zwischen den Haken. Die hauptsächliche Kraftübertragung geht über die Querflächen des am inneren Bandabschnitt angeordneten Hakens und des am äußeren Bandabschnitt angeordneten Hakens. Gleichzeitig verringert sich die Gefahr von Verletzungen durch die Schlauchklemme und von Beschädigungen der Schlauchklemme selbst. Eine Öffnungshaube trägt dazu bei, dass die Haken in der Höhe kompakt gestaltet werden können, denn sie gewährt dem Positionierhaken den nötigen Platz, damit dieser am Zughaken eingehängt werden kann.

Aufgrund der ineinandergreifenden Ausformung des Zughakens und der Öffnungshaube lässt sich die Teilung der Positionierhaken verringern, was eine Durchmesseränderung in kleinen Schritten gestattet

Die erfindungsgemäße Gestaltung der Haken erleichtert ferner das Einhängen der Klemmbandabschnitte im gebogenen Zustand der Schlauchklemme.

Die Bereiche des Klemmbandes an den Zughaken und/oder an den Positionierhaken können mittels seitlicher Verstärkungsprägungen zwischen den Klemmbandkanten und den Zug- bzw. Positionierhaken verstärkt sein. Diese Verstärkungsprägungen können als Sicken ausgestaltet sein, die radial nach außen aus dem Klemmband herausragen und die sich jeweils über den gesamten Verlauf der Zug- oder Positionierhaken oder nur einen Teil davon erstrecken. Besonders sinnvoll sind solche Verstärkungssicken in den Bereichen des Klemmbandes, die sich nach Arretierung der Schlauchklemme im geschlossenen Zustand der Schlauchklemme in einer Position unterhalb der Spanneinrichtung wiederfinden können. Dies gilt insbesondere für den Bereich der Positionierhaken sowie den zungenseitig daran angrenzenden Bereich des Klemmbandes. Eine zusätzliche Ausgestaltung dieser Verstärkungssicken als Wellensicken bewirkt dabei eine besondere Stabilisierung des Klemmbandes gegen ein Einknicken in radialer Richtung unterhalb der Spanneinrichtung.

### Zeichnungen

Zwei Ausführungsbeispiele der Erfindung werden nachstehend anhand der Zeichnungen näher erläutert. Darin zeigen
Fig. 1 die Schlauchklemme im geschlossenen Zustand nach einem Ausführungsbeispiel der Erfindung,
Fig. 2 und 3 die Schlauchklemme im gestreckten Ausgangszustand, gesehen von der im geschlossenen Zustand äußeren bzw. inneren Seite,

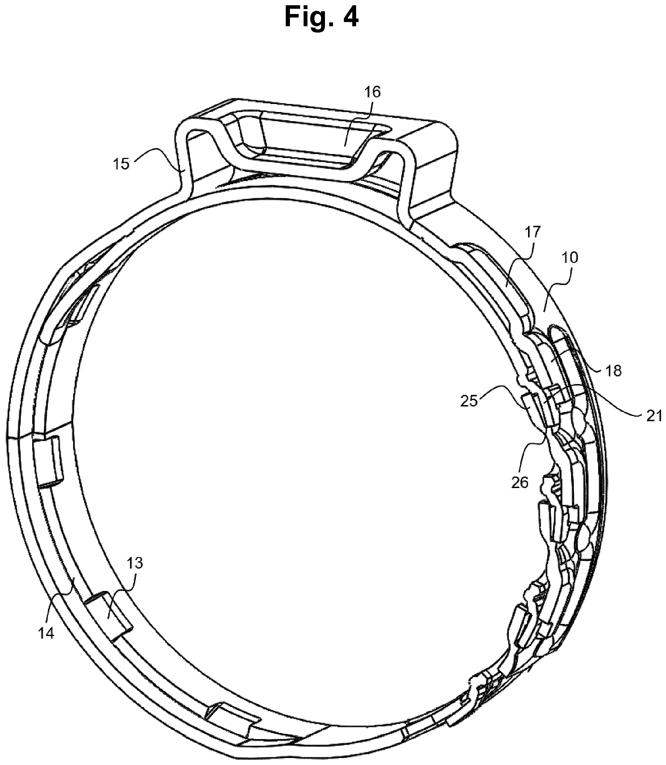

Fig. 4 die Schlauchklemme der Fig. 1, längs der Klemmbandmitte geschnitten,
Fig. 5 und 6 vergrößerte Darstellungen der in dem Klemmband ausgebildeten Haken,
Fig. 7 und 8 Schnitte durch den äußeren bzw. den inneren Abschnitt des Klemmbandes im gestreckten Zustand,
Fig. 9 das Ende des äußeren Klemmbandabschnitts,
Fig. 10 einen Teil des inneren Klemmbandabschnitts, gesehen von der im geschlossenen Zustand der Schlauchklemme inneren Seite,
Fig. 11 und 12 die Schlauchklemme im gestreckten Ausgangszustand nach einem weiteren Ausführungsbeispiel der Erfindung, gesehen von der im geschlossenen Zustand äußeren bzw. inneren Seite,
Fig. 13 eine vergrößerte Ansicht des Zungenendes des Klemmbandes nach dem weiteren Ausführungsbeispiel und
Fig. 14 eine vergrößerte Ansicht des Bandbogenabschnitts des Klemmbandes nach dem weiteren Ausführungsbeispiel.

### Ausführungsbeispiel

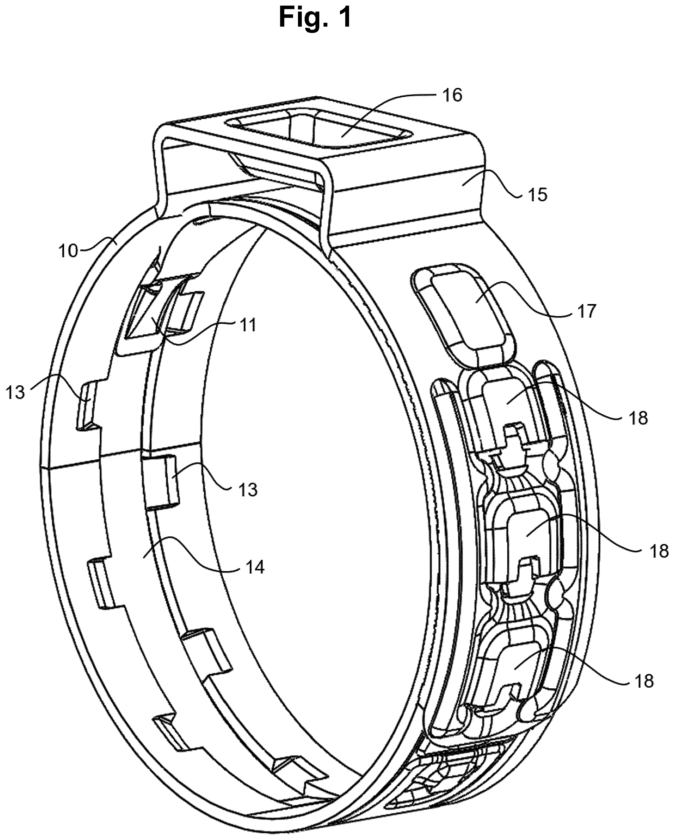

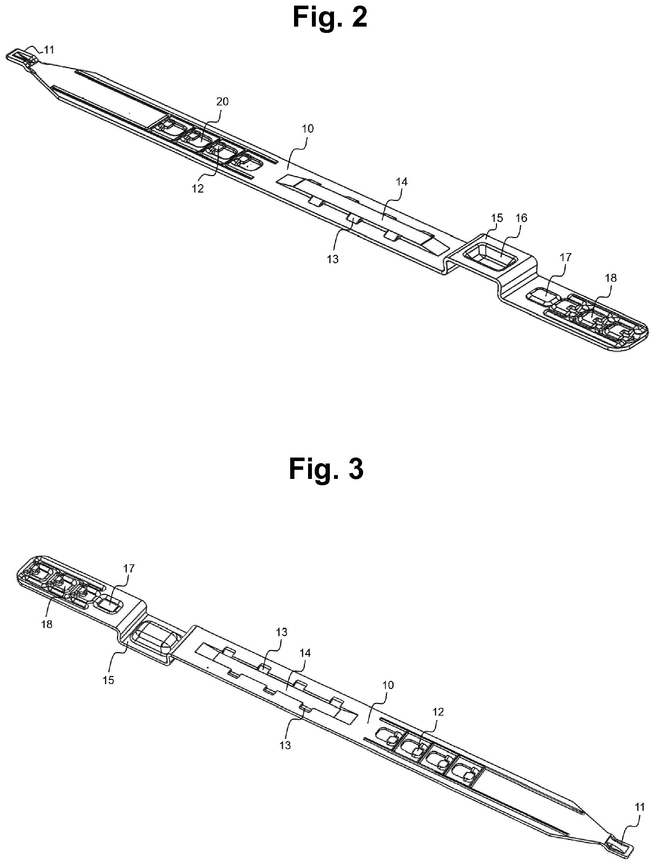

Die in den Fig. 1 bis 3 dargestellte Schlauchklemme besteht aus einem offenen Klemmband **10**, das ausgehend von dem in Fig. 2 links oben (in Fig. 3 rechts unten) gezeigten inneren Bandende eine Zunge **11**, eine Reihe von (in dem gezeigten Beispiel vier) Positionierhaken **12**, einen durch zwei parallele Längsschnitte aus dem Klemmband **10** geschnittenen, über Stege **13** mit Seitenteilen des Klemmbandes **10** verbundenen Bandbogen **14**, eine Spanneinrichtung **15** in Gestalt eines sogenannten "Oetiker"-Ohrs mit einem Paar von auswärts gekröpften Schenkeln und einem diese verbindenden, durch eine Sicke **16** verstärkten Steg, eine Freistellungshaube **17** sowie im anderen, äußeren Bandabschnitt drei Zughaken **19** und Öffnungshauben **18** aufweist.

Die hier beschriebene Schlauchklemme ist insbesondere zur Dichtung und Befestigung von Faltenbälgen, etwa im Einsatz bei Gelenkwellen, aus thermoplastischen Kunststoffen oder anderen schwer verformbaren Materialien hoher Shore-Härte gedacht.

Im Gebrauch wird die vom Hersteller im geschlossenen Zustand gelieferte Schlauchklemme axial auf das Abbindegut, etwa einen Rohrnippel und einen diesen umgebenden Schlauch, aufgeschoben oder, alternativ, zur radialen Montage geöffnet und um das Abbindegut herumgelegt, wobei die Zunge **11** unter dem Bandbogen **14** zu liegen kommt.

Sodann werden die im äußeren Bandabschnitt vorhandenen drei Zughaken **19** mit den dem kleinstmöglichen Durchmesser des jeweiligen Abbindegutes entsprechenden, im inneren Bandabschnitt angeordneten Positionierhaken **12** in Eingriff gebracht.

In dem gezeigten Ausführungsbeispiel sind drei Zughaken **19** vorhanden. Je nach den Kraft- und Festigkeitsanforderungen können zwei oder ein einziger Zughaken ausreichen oder auch mehr als drei Zughaken **19** erforderlich sein.

Die Anzahl an Positionierhaken **12** ist größer als die der Zughaken **19**, um einen entsprechenden Variationsbereich im Klemmendurchmesser zu erreichen. In dem gezeigten Ausführungsbeispiel sind der Einfachheit halber nur vier Positionierhaken **12** angenommen. In Fig. 1 ist die Schlauchklemme auf den größten Durchmesser geschlossen. Bei kleinstem geschlossenen Durchmesser würde in diesem Fall der dem inneren Bandende am nächsten angeordnete Positionierhaken **12** unter der Freistellungshaube **17** liegen, und die nächsten drei Positionierhaken **12** in Eingriff mit den drei Zughaken **19** stehen.

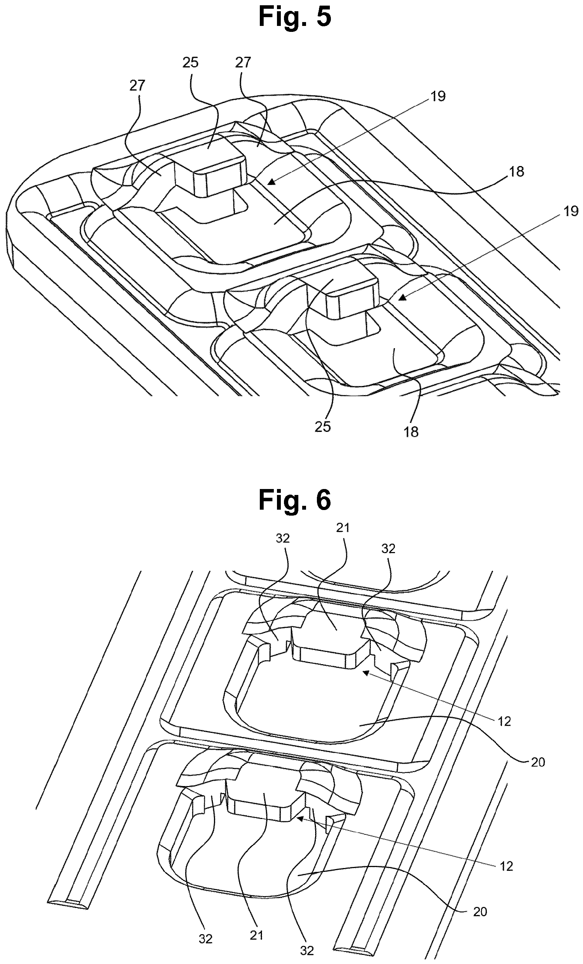

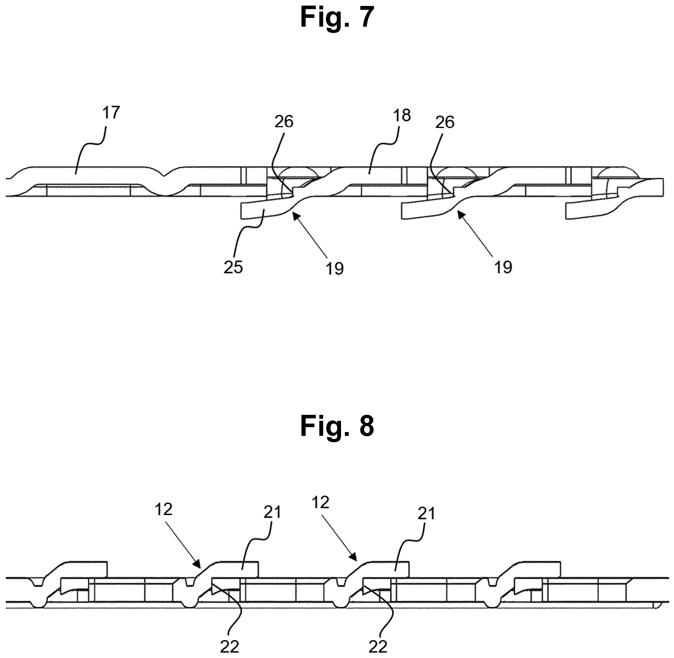

Wie insbesondere aus Fig. 2, 3, 6 und 8 ersichtlich, ist jeder Positionierhaken **12** in einem aus dem Klemmband **10** ausgeschnittenen Freistellfenster **20** angeordnet. Er umfasst einen Lappen **21**, der an seiner von der Spanneinrichtung **15** abgewandten Kante mit dem Klemmband **10** zusammenhängt, und zum Klemmband **10** im Wesentlichen parallel verläuft. Am Übergang zu dem Lappen **21** ist radial einwärts und von der Spanneinrichtung **15** abgewandt eine Stufe **22** ausgebildet.

Wie insbesondere aus Fig. 1, 2, 5 und 7 ersichtlich, ist jeder Zughaken **19** radial einwärts kuppelartig gewölbt und weist einen Lappen **25** auf, der den Lappen **21** des Positionierhakens **12** übergreift. Die Öffnungshaube **18**, die auf der gegenüberliegenden Seite des Zughakens radial auswärts ausgeformt ist, gewährt dem Positionierhaken **12** den nötigen Platz, damit der Lappen **25** des Zughakens **19** überhaupt den Lappen **21** des Positionierhakens **12** übergreifen kann. Am Übergang zu dem Lappen **25** ist radial auswärts und der Spanneinrichtung **15** zugewandt eine Stufe **26** ausgebildet.

Die Lappen **21**, **25** der Positionier- und Zughaken **12**, **19** halten den äußeren und den inneren Klemmbandabschnitt aufeinander, während die Kraftübertragung bei gespannter Schlauchklemme zwischen quer zur Längsrichtung des Klemmbandes **10** stehenden Querflächen **27** der Zughaken **19** und quer zur Längsrichtung des Klemmbandes **10** stehenden Querflächen **32** der Positionierhaken **12** erfolgt.

Je nach Gestaltungslänge der Lappen **25** und **21** kann im geschlossenen Zustand der Schlauchklemme die Stufe **22** des Positionierhakens **12** am freien Ende des Lappens **25** des Zughakens **19** und die Stufe **26** des Zughakens **19** am freien Ende des Lappens **21** des Positionierhakens **12** anliegen, was eine sekundäre Kraftübertragungsstelle generiert und in einer gegenseitigen Stabilisierung der am inneren und am äußeren Bandabschnitt angeordneten Haken resultiert.

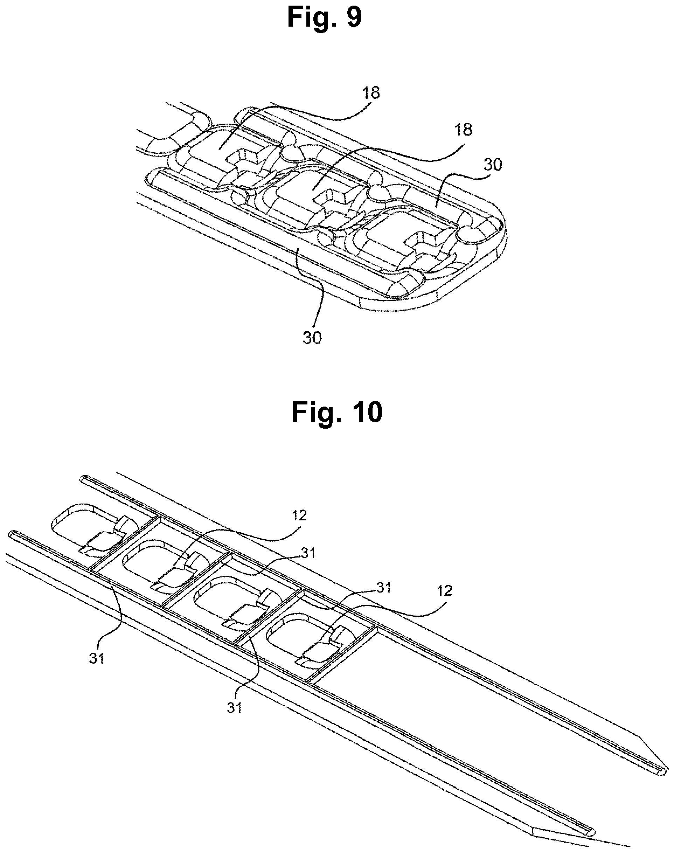

Gemäß Fig. 9 sind die Zughaken **19** und Öffnungshauben **18** von in das Klemmband **10** eingeprägten Verstärkungssicken **30** umgeben, die bei gegebener Materialstärke die Biegesteifigkeit erhöhen und die Übertragung höherer Kräfte gestatten.

Aus dem gleichen Grund sind gemäß Fig. 10 die Freistellfenster **20** der Positionierhaken **12** durch Prägungen **31** zwischen den Fenstern **20** und den Seitenkanten des Klemmbandes **10** versteift.

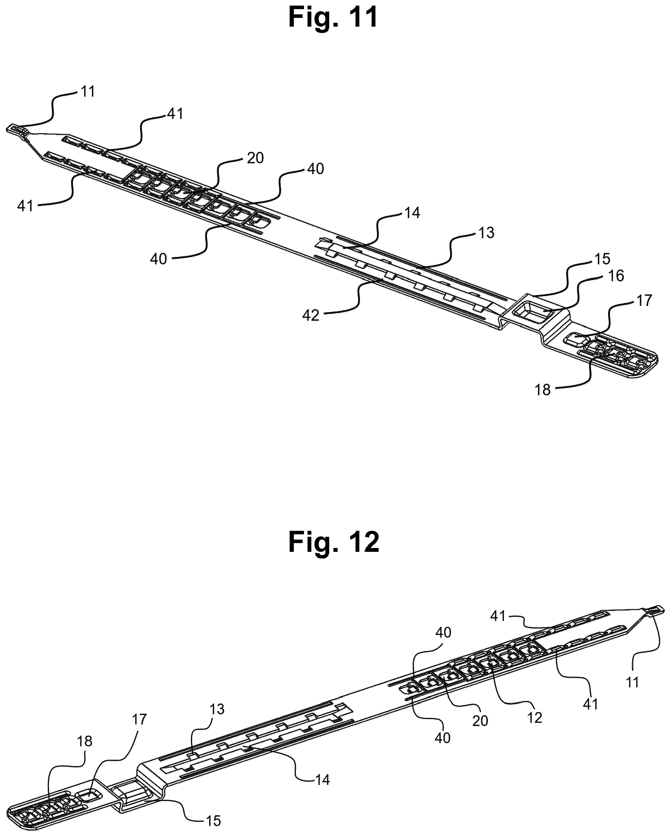

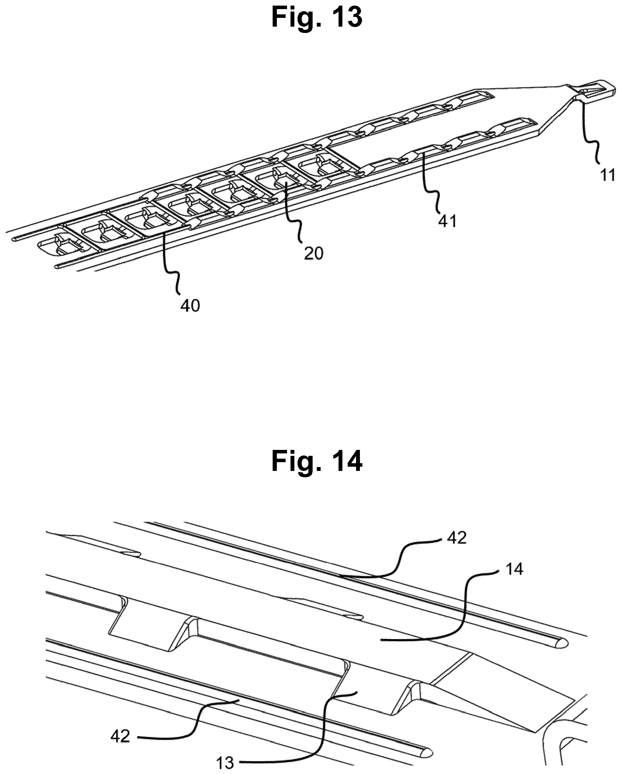

Die Fig. 11 bis 14 zeigen ein weiteres Ausführungsbeispiel der Erfindung, bei dem ein Abschnitt des Klemmbandes **10** mit seitlichen Verstärkungssicken, teilweise in durchgängiger Rinnenform **40** und als Wellensicken **41** in unterbrochener Rinnenform ausgebildet sind.

In geschlossenem Zustand der Schlauchklemme befinden sich je nach Schlauchdurchmesser einer oder mehrere der Positionierhaken **12** in Eingriff mit der entsprechenden Anzahl von Zughaken **19.** Zungenseitig davon gelangt ein Teil des inneren Bandendes in die Position unterhalb der Spanneinrichtung **15.** Die in dem dafür in Frage kommenden Teil des Klemmbandes **10** vorgesehenen seitlichen Wellensicken **41** stabilisieren das Klemmband **10** dabei gegen ein Einknicken in radialer Richtung unter der Spanneinrichtung **15.** Die Wellensicken **41** können in unterbrochener Rillenform oder als Aneinanderreihung von Einzelsicken ausgestaltet sein. Auf beiden Seiten des Klemmbandes **10** gehen sie jeweils in durchgehend rinnenförmige Verstärkungssicken **40** über.

Im Bereich des Bandbogens **14**, der einen Zungenkanal für die Zunge **11** bildet und diese im geschlossenen Zustand aufnimmt, sind seitliche Verstärkungssicken **42** vorgesehen. Da Bruchstellen gehäuft im Bereich des Bandbogens **14** auftreten, tragen die zusätzlichen Verstärkungssicken **42** hier wirksam zu einer Stabilisierung des Bandbogenbereichs bei.

Im vorliegenden Ausführungsbeispiel sind die Verstärkungssicken **40**, **41**, **42** sowohl im Bereich der Positionierhaken **12** als auch in dem der Zughaken **19** vorgesehen, um gemeinsam zur Gesamtstabilität der Schlauchklemme beizutragen. Es ist aber auch denkbar, nur die Verstärkungs- bzw. Wellensicken **40**, **41** oder nur die Verstärkungssicken **42** vorzusehen.

### Bezugszeichen

| | |
|---|---|
| **10** | Klemmband |
| **11** | Zunge |
| **12** | Positionierhaken |
| **13** | Stege |
| **14** | Bandbogen |
| **15** | Spanneinrichtung |
| **16** | Sicke |
| **17** | Freistellungshaube |
| **18** | Öffnungshaube |
| **19** | Zughaken |
| **20** | Freistellfenster |
| **21** | Lappen |
| **22** | Stufe |
| **25** | Lappen |
| **26** | Stufe |
| **27** | Querfläche |
| **30** | Verstärkungssicken |
| **31** | Prägungen |
| **32** | Querfläche |
| **40** | Verstärkungssicke |
| **41** | Wellensicke |
| **42** | Verstärkungssicke |

## Patentansprüche

1. Schlauchklemme aus einem Klemmband (**10**) mit im geschlossenen Zustand der Schlauchklemme einander überlappenden Bandabschnitten, an denen Haken (**12**, **19**) zum Schließen der Schlauchklemme angeordnet sind, und mit einer im äußeren Bandabschnitt angeordneten Spanneinrichtung (**15**) zum Spannen der Schlauchklemme um einen zu klemmenden Gegenstand,
wobei die Haken (**12**, **19**) aus dem Klemmband herausgeprägt sind und jeweils einen Lappen (**21**, **25**) und eine quer zur Richtung des Klemmbandes (**10**) stehende Querfläche (**27**, **32**) aufweisen, wobei im geschlossenen Zustand der Schlauchklemme der Lappen (**21**) mindestens eines am inneren Bandabschnitt angeordneten Hakens (**12**) und der Lappen (**25**) eines am äußeren Bandabschnitt angeordneten Hakens (**19**) einander übergreifen;
**gekennzeichnet dadurch, dass** die Kraftübertragung im gespannten Zustand der Schlauchklemme über die sich gegenseitig berührenden Querflächen (**27**, **32**) der Haken (**12**, **19**) geht.

2. Schlauchklemme nach Anspruch 1, wobei im geschlossenen Zustand der Schlauchklemme eine Stufe (**22**) eines am inneren Bandabschnitt angeordneten Hakens (**12**) an der Stirnfläche des Lappens (**25**) eines am äußeren Bandabschnitt angeordneten Hakens (**19**) anliegt und eine Stufe (**26)** eines am äußeren Bandabschnitt angeordneten Hakens (**19**) an der Stirnfläche des Lappens (**21**) eines am inneren Bandabschnitt angeordneten Hakens (**12**) anliegt.

3. Schlauchklemme nach einem der vorhergehenden Ansprüche, wobei die Haken (**12**, **19**) zum Schließen der Schlauchklemme mindestens einen am äußeren Bandabschnitt angeordneten und als Zughaken (**19**) ausgebildeten Haken und einen oder mehrere am inneren Bandabschnitt angeordnete und als Positionierhaken (**12**) ausgebildete Haken umfassen.

4. Schlauchklemme nach Anspruch 3, wobei drei Zughaken (**19**) und mindestens drei, insbesondere mehr als drei, Positionierhaken (**12**) vorgesehen sind.

5. Schlauchklemme nach Anspruch 3 oder 4, wobei die Zughaken (**19**) und/oder die Positionierhaken (12) jeweils von aus dem Klemmband (**10**) herausgeprägten Verstärkungssicken (**30**) umgeben sind.

6. Schlauchklemme nach einem der Ansprüche 3 bis 5, wobei das Klemmband (**10**) zwischen den Zughaken (**19**) und den Klemmbandkanten und/oder zwischen den Positionierhaken (**12**) und den Klemmbandkanten angeordnete Verstärkungsprägungen (**31**, **40**, **41**, **42**) aufweist.

7. Schlauchklemme nach Anspruch 6, wobei zwischen den Positionierhaken (**12**) und den Klemmbandkanten angeordnete Verstärkungssicken (**40**, **41**) in Richtung des Endes des inneren Bandabschnitts fortgesetzt sind.

8. Schlauchklemme nach Anspruch 6 oder 7, wobei die zwischen den Positionierhaken (**12**) und den Klemmbandkanten angeordneten Verstärkungssicken über ihren gesamten Verlauf oder über einen Teil ihres Verlaufs als Wellensicken (**41**) ausgebildet sind.

9. Schlauchklemme nach Anspruch 8, wobei die zwischen den Positionierhaken (**12**) und den Klemmbandkanten angeordneten Verstärkungssicken über einen Teil des inneren Bandabschnitts, der im geschlossenen Zustand der Schlauchklemme unterhalb der Spanneinrichtung (**15**) angeordnet ist, als Wellensicken (**41**) ausgebildet sind.

## Claims

1. A hose clamp made of a clamping band (**10**) comprising band sections which overlap one another in the closed state of the hose clamp and on which hooks (**12**, **19**) are arranged for closing the hose clamp, and a tightening device (**15**) arranged in the outer band section for tightening the hose clamp around an object to be clamped,
wherein the hooks (**12**, **19**) are stamped out from the clamping band and each have a lug (**21**, **25**) and a transverse surface (**27**, **32**) facing transversely to the direction of the clamping band (**10**), wherein, in the closed state of the hose clamp, the lug (**21**) of at least one hook (**12**) arranged on the inner band section and the lug (**25**) of a hook (**19**) arranged on the outer band section engage over one another;
**characterized in that** the force transmission in the tightened state of the hose clamp occurs via the mutually contacting transverse surfaces (**27**, **32**) of the hooks (**12**, **19**).

2. The hose clamp according to claim 1, wherein, in the closed state of the hose clamp, a step (**22**) of a hook (**12**) arranged on the inner band section abuts with the end face of the lug (**25**) of a hook (**19**) arranged on the outer band section and a step (**26**) of a hook (**19**) arranged on the outer band section abuts with the end face of the lug (**21**) of a hook (**12**) arranged on the inner band section.

3. The hose clamp according to one of the preceding claims, wherein the hooks (**12**, **19**) for closing the hose clamp comprise at least one hook arranged on the outer band section and configured as a pulling hook (**19**) and one or more hooks arranged on the inner band section and designed as positioning hooks (**12**).

4. The hose clamp according to claim 3, wherein three pulling hooks (**19**) and at least three, preferably more than three, positioning hooks (**12**) are provided.

5. The hose clamp according to claim 3 or 4, wherein the pulling hooks (1**9**) and/or the positioning hooks (12) are each surrounded by reinforcement beads (**30**) stamped out from the clamping band (**10**).

6. The hose clamp according to any one of claims 3 to 5, wherein the clamping band (**10**) has reinforcing embossments (**31**, **40**, **41**, **42**) arranged between the tightening hooks (**19**) and the clamping band edges and/or between the positioning hooks (**12)** and the clamping band edges.

7. The hose clamp according to claim 6, wherein reinforcement beads (**40**, **41)** arranged between the positioning hooks (**12)** and the clamping band edges are continued towards the end of the inner band section.

8. The hose clamp according to claim 6 or 7, wherein the reinforcement beads arranged between the positioning hooks (**12**) and the clamping band edges are formed as corrugated beads (**41**) over their entire length or over a part of their length.

9. The hose clamp according to claim 8, wherein the reinforcement beads arranged between the positioning hooks (**12**) and the clamping band edges are formed as corrugated beads (**41)** over a part of the inner band section which is positioned underneath the tensioning device (**15**) in the closed state of the hose clamp.

## Revendications

1. Collier de serrage pour tuyau souple constitué d'une bande (10) de serrage comprenant des sections de bande qui se chevauchent les unes les autres dans l'état fermé du collier de serrage pour tuyau souple et sur lesquelles des crochets (12, 19) sont agencés pour fermer le collier de serrage pour tuyau souple, et un dispositif (15) de serrage agencé dans la section extérieure de bande pour serrer le collier de serrage pour tuyau souple autour d'un objet destiné à être serré,
dans lequel les crochets (12, 19) sont estampés depuis la bande de serrage et ont chacun une languette (21, 25) et une surface transversale (27, 32) faisant transversalement face au sens de la bande (10) de serrage, dans lequel, dans l'état fermé du collier de serrage, la languette (21) d'au moins un crochet (12) agencé sur la section intérieure de bande et la languette (25) d'un crochet (19) agencé sur la section extérieure de bande s'engagent l'une par-dessus l'autre ;
**caractérisé en ce que** la transmission de force dans l'état serré du collier de serrage pour tuyau souple se fait par l'intermédiaire des surfaces transversales (27, 32) en contact mutuel des crochets (12, 19).

2. Collier de serrage pour tuyau souple selon la revendication 1, dans lequel, dans l'état fermé du collier de serrage, un échelon (22) d'un crochet (12) agencé sur la section intérieure de bande vient buter avec la face d'extrémité de la languette (25) d'un crochet (19) agencé sur la section extérieure de bande et un échelon (26) d'un crochet (19) agencé sur la section extérieure de bande vient buter avec la face d'extrémité de la languette (21) d'un crochet (12) agencé sur la section intérieure de bande.

3. Collier de serrage pour tuyau souple selon l'une des revendications précédentes, dans lequel les crochets (12, 19) pour fermer le collier de serrage pour tuyau souple comprennent au moins un crochet agencé sur la section extérieure de bande et configuré comme un crochet (19) de traction et un ou plusieurs crochets agencés sur la section intérieure de bande et conçus comme des crochets (12) de positionnement.

4. Collier de serrage pour tuyau souple selon la revendication 3, dans lequel trois crochets (19) de traction et au moins trois, préférablement plus de trois, crochets (12) de positionnement sont prévus.

5. Collier de serrage pour tuyau souple selon la revendication 3 ou 4, dans lequel les crochets (19) de traction et/ou les crochets (12) de positionnement sont chacun entourés par des cordons (30) de renfort estampés depuis la bande (10) de serrage.

6. Collier de serrage pour tuyau souple selon l'une quelconque des revendications 3 à 5, dans lequel la bande (10) de serrage a des bossages (31, 40, 41, 42) de renfort agencés entre les crochets (19) de serrage et les bords de bande de serrage et/ou entre les crochets (12) de positionnement et les bords de bande de serrage.

7. Collier de serrage pour tuyau souple selon la revendication 6, dans lequel des cordons (40, 41) de renfort agencés entre les crochets (12) de positionnement et les bords de bande de serrage sont poursuivis vers l'extrémité de la section intérieure de bande.

8. Collier de serrage pour tuyau souple selon la revendication 6 ou 7, dans lequel les cordons de renfort agencés entre les crochets (12) de positionnement et les bords de bande de serrage sont formés comme des cordons ondulés (41) sur la totalité de leur longueur ou sur une partie de leur longueur.

9. Collier de serrage pour tuyau souple selon la revendication 8, dans lequel les cordons de renfort agencés entre les crochets (12) de positionnement et les bords de bande de serrage sont formés comme des cordons ondulés (41) sur une partie de la section intérieure de bande qui est positionnée en-dessous du dispositif (15) de mise en tension dans l'état fermé du collier de serrage.
